# NEUE EUROPÄISCHE PATENTSCHRIFT

(11) **EP 2 386 397 B2**
(45) Veröffentlichungstag und Bekanntmachung des Hinweises auf die Entscheidung über den Einspruch: **29.04.2020**
(45) Hinweis auf die Patenterteilung: 09.01.2013
(21) Anmeldenummer: 10162543.2
(22) Anmeldetag: 11.05.2010
(51) Int. Cl.: B29B 15/12, B29C 70/52, C08G 63/91, C08G 69/48, C08J 5/10

(54) **Pultrusionsverfahren, pultrudiertes Halbzeug und seine Verwendung**
Pultrusion method
Procédé de pultrusion

(43) Veröffentlichungstag der Anmeldung: 16.11.2011
(73) Patentinhaber: BASF SE, 67056 Ludwigshafen am Rhein (DE)
(72) Erfinder: Scherzer, Dietrich, Dr., 67433 Neustadt (DE); Wollny, Andreas, Dr., 67063 Ludwigshafen (DE); Schillo, Simone, 67069 Ludwigshafen (DE)
(74) Vertreter: Kudla, Karsten

(56) Entgegenhaltungen:
- EP-A1- 0 174 225
- EP-A1- 0 201 367
- EP-A1- 0 261 020
- EP-A2- 0 444 867
- WO-A1-95/35343
- WO-A1-03/074581
- WO-A1-2005/063882
- WO-A1-2008/066976
- DE-A1-102005 037 754
- US-A- 5 424 388
- US-A- 5 605 945

## Beschreibung

Die vorliegende Erfindung betrifft ein verbessertes Pultrusionsverfahren gemäß Anspruch 1 zur Herstellung von Halbzeugen auf Basis von Polyamiden, dadurch gekennzeichnet, dass während des Tränkens (Imprägnierens) der Fasern reaktive Kettenverlängerer zugegeben werden.

### Hintergrund

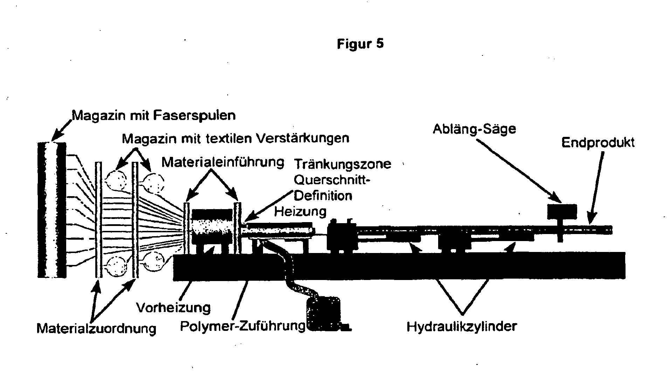

Pultrusionsanlagen werden verwendet, um beispielsweise unidirektional faserverstärkte Profile herzustellen oder um langfaser-verstärktes Granulat herzustellen. Figur 5 zeigt beispielhaft eine Anlage dieser Art.

In Pultrusionsanlagen werden sehr große Mengen an Fasern mit Reaktivharzen (Epoxy, PUR, Nylon-RIM) oder mit Thermoplasten innig vermischt und pultrudiert.

Die Anlagen und das allgemein angewandte Pultrusionsverfahren werden ausführlich beschrieben im "Handbuch Verbundwerkstoffe", Hanser Verlag 2004, Herausgeber M. Neizel, Seite 237.

Es ist schwierig, in derartigen Pultrusionsanlagen große Mengen an Faserbündeln gut mit hochviskosen thermoplastischen Kunststoffen zu durchtränken. Beim Versuch, dies zu tun, entstehen häufig Profile oder Granulate mit Lufteinschlüssen und nur teilweise benetzten Fasern.

Die Lösung, besonders niederviskose Polymere zu verwenden, ist unbefriedigend, weil die mechanischen Eigenschaften der hergestellten Halbzeuge dadurch verschlechtert werden.

DE 10 2005 037 754 offenbart ein Verfahren zur Herstellung eines Polyesters mit einem erhöhten Molekulargewicht, wobei ein erster Polyester mit einer reaktiven Verbindung compoundiert wird, wodurch sich das Molekulargewicht des ersten Polyesters erhöht.

US 5424388 und EP 0 174 225 offenbaren ein Pultrusions-Verfahren für langfaserverstärkte Polyamid-Verbundkörper

Die im Stand der Technik offenbarten Verfahren und Anlagen zur Herstellung von Halbzeugen durch Pultrusion weisen somit Nachteile auf.

Es war daher die Aufgabe der vorliegenden Erfindung, ein verbessertes Pultrusionsverfahren bereitzustellen, mit dessen Hilfe die oben angesprochenen Nachteile und Probleme vermieden oder beseitigt werden können.

### Erläuterungen

Im Rahmen der vorliegenden Offenbarung werden die Begriffe "Profil" und "Halbzeug" synonym verwendet.

Der Ausdruck "Halbzeug" ist ein in der Fachwelt bekannter Ausdruck und stellt einen Oberbegriff für vorgefertigte Rohmaterialformen, wie zum Beispiel Bleche, Stangen, Rohre, Stränge usw. dar.

Der Begriff "Pultrusion" ist äquivalent mit dem Begriff "Strangziehen". Man versteht darunter eine Methode zur Herstellung von Verbundwerkstoffen wie faserverstärkte Kunststoffe in Form von Profilen in einem diskontinuierlichen oder kontinuierlichen, bevorzugt kontinuierlichen Ablauf.

Die Formen der herstellbaren Profile sind dabei vielfältig, wie z. B. Matten, Rohre, Träger, Formstücke, z. B. für die Automobilindustrie, für Gehäuse, Griffe und Stiele für Werkzeug und Sportgeräte wie Paddel und Tennisschläger.
Figuren
Figur 1 zeigt die Ergebnisse des Versuchs 1: Ultramid B® bei 260 °C.
Figur 2 zeigt die Ergebnisse des Versuchs 2: Ultramid A® bei 280 °C.
Figur 3 zeigt die Ergebnisse des Versuchs 3: Ultradur® bei 260 °C.
Figur 4 zeigt die Ergebnisse des Versuchs 4: Ecoflex® bei 220 °C.
Figur 5 zeigt beispielhaft eine typische Pultrusionsanlage, bzw. ein typisches Pultrusionsverfahren.

### Beschreibung der Erfindung

Die Aufgabe konnte mit der vorliegenden Erfindung gelöst werden, indem ein Pultrusionsverfahren zur Herstellung von Halbzeugen auf Basis von Polyamiden, bereit gestellt wird, das dadurch gekennzeichnet ist, dass während des Tränkens (Imprägnierens) der Fasern reaktive Kettenverlängerer zugegeben werden, wobei die reaktiven Kettenverlängerer ausgewählt sind aus der Gruppe bestehend aus epoxygruppenhaltigen Molekülen. Das Verfahren ist für alle Polymeren mit reaktiven Endgruppen geeignet (aber nur für Polyamide beansprucht), die mit reaktiven Kettenverlängerern auf Basis von Epoxy-, Anhydrid- oder Isocyanatgruppen reagieren (aber nur Kettenverlängerer auf Basis von Epoxygruppen werden beansprucht).

Es wurde überraschenderweise gefunden, dass sich durch Zugabe von reaktiven Kettenverlängerern, die über Epoxyfunktionen verfügen, die beschriebenen Probleme beim Durchtränken mit Polyamiden lösen lassen. Die Faserbündel oder Gewebe werden mit niedrigviskosen, niedermolekularen Polymeren getränkt, während gleichzeitig geringe Mengen an reaktiven Kettenverlängerern zugegeben werden. Während der Pultrusion baut sich dann während und nach dem Tränken der Fasern Molekulargewicht auf und die gewünschten guten mechanischen Eigenschaften des Halbzeugs oder Granulats werden erhalten.

Der Gegenstand der vorliegenden Erfindung ist ein somit Verfahren zur Herstellung von Halbzeugen auf Basis von Polyamiden, durch Pultrusion, dadurch gekennzeichnet, dass während des Tränkens der Polymer-Fasern reaktive Kettenverlängerer zugegeben werden, wobei die reactiven Kettenverlägerer ausgewahlt sind aus der Gruppe bestehend aus epoxygruppenhaltigen Molekülen.

Geeignete Produkte sind beispielsweise die reaktiven Kettenverlängerer der BASF, die unter dem Handelsnamen Joncryl® vertrieben werden. Die Kettenverlängerer mit der Bezeichnung Joncryl® sind Copolymere aus Styrol und Glycidylacrylaten bzw. Copolymere aus Styrol und Säureanhydriden.

In der Tabelle 1 sind einige reaktive Kettenverlängerer der Marke Joncryl® beispielhaft aufgeführt.

**Tabelle 1**

| I. D. | Fest/ Flüssig | Funktionalität | Polarität | Mw | Äq. Gew. (g/eg) | Tg |
|---|---|---|---|---|---|---|
| ADR4368F | Fest | Epoxy | Hoch | 6,800 | 280 | 64 |
| ADR4370S | Fest | Epoxy | Hoch | 6,800 | 280 | 54 |
| ADR4300 | Fest | Epoxy | Mäßig Hoch | 5,500 | 445 | 55 |
| ADR4380 | Flüssig | Epoxy | | 3,300 | 450 | -41 |
| ADR4385 | Flüssig | Epoxy | Sehr Hoch | 6,000 | 450 | -37 |
| ADR-3300 | Fest | Säure | Sehr Hoch | 3,100 | 360 | 93 |
| ADR-3229 | Fest | Anhydrid | Mäßig | 8,300 | 450 | 110 |

Das Verfahren wird durch Zusatz von reaktiven Kettenverlängerern, wie zum Beispiel Joncrylen® mit Epoxyfunktionen, entscheidend verbessert, weil man besonders niedrigviskose (niedrigmolekulare) Thermoplaste verwenden kann und trotzdem im fertigen Produkte hohe Molekulargewichte erreicht werden.

Aufgrund des speziellen erfindungsgemäßen Pultrusionsverfahrens zeichnen sich die dadurch herstellbaren Halbzeuge dadurch aus, dass die eingesetzten reaktiven Kettenverlängerer in die Polymere, die die Basis der Halbzeuge bilden, eingebaut werden. Die Struktur der nach dem erfindungsgemäßen Verfahren herstellbaren Halbzeuge unterscheidet sich somit von der Struktur von mittels Verfahren gemäß dem Stand der Technik hergestellter Halbzeuge. Somit ist ein weiterer Gegenstand der vorliegenden Anmeldung ein Halbzeug, herstellbar nach dem erfindungsgemäßen Pultrusionsverfahren.

Die Kettenverlängerer werden in Mengen von 0,1 Gew.-% bis zu 10 Gew.-% , bevorzugt von 0,3 bis 6 Gew.-% und ganz besonders bevorzugt in Mengen von 0,5 Gew.-% bis 5 Gew.-%, bezogen auf das Polymere, zugegeben.

Für das erfindungsgemäße Verfahren verwendbare Polymere als Basis von Halbzeugen sind Polyamide. Beispielhaft seien genannt als geeignete Polyamide PA 6 und PA 6.6, PA 6.10, PA 6.T und den Blends aus diesen Polyamiden. Bevorzugt wird als Polyamid PA 6 und/ oder PA 6.6 verwendet.

Die erfindungsgemäß herstellbaren Halbzeuge sind vielfältig, und umfassen bevorzugt einen Werkstoff, ausgewählt aus der Gruppe bestehend aus glas- und/ oder kohlenstofffaserverstärkten Polyamiden (Verbundwerkstoffe).

Beispielsweise können die Halbzeuge in Form vorgefertigter Rohmaterialformen, wie zum Beispiel Bleche, Stangen, Rohre, vorliegen. Die Formen der Halbzeuge sind vielfältig; sie können auch Matten, Platten, Träger wie T- und Doppel-T-Träger, U-, W-und UW-Profile, Formstücke z. B. für die Automobilindustrie, für Gehäuse, Griffe und Stiele für Werkzeug und Sportgeräte wie Paddel oder Tennisschläger umfassen. In einer Ausführungsform liegen die Halbzeuge in Form von Strängen vor.

Das Pultrusionsverfahren wird in der Regel bei Temperaturen von 50 bis 100°C oberhalb des Schmelzpunktes bei teilkristallinen Thermoplasten durchgeführt. Der Kettenverlängerer wird entweder zusammen mit dem Thermoplastgranulat zugegeben oder er wird als Schmelze in die Thermoplastschmelze dosiert. Die Tränkung der Fasern erfolgt in der Regel kontinuierlich mit Geschwindigkeiten im Bereich von einigen Metern pro Minute. Das Tränken der Faserbündel erfolgt im Allgemeinen unter leichtem Überdruck, kann aber in einen weiten Druckbereich von Normaldruck bis zu etwa 10 bar erfolgen.

### Beispiele

Im Folgenden werden einige illustrative Beispiele und Versuchsergebnisse beschrieben. Diese sollen nur zur Veranschaulichung der Erfindung dienen und keinesfalls den Umfang der Erfindung einschränken.

Es wurden Versuche an einem Plattenrheometer mit verschiedenen reaktiven Joncrylen® durchgeführt.

Die Versuchsbedingungen waren wie folgt:
Messgerät: deformationsgesteuertes Rheometer "Ares-2" der Firma TA-Instruments Messgeometrie: Platte-Platte, ∅ 25 mm, h= 1,0 mm
Test: time-sweep
Deformation: B27 E 30% / A 27 E 10%

| | |
|---|---|
| Messtemperatur(en) : | Ultramid® B27 E (PA6) bei 260°C |
| | Ultramid® A27 E (PA6) bei 280°C |
| | Ultradur® B2550 bei 260° |
| | Ecoflex® bei 220°C |

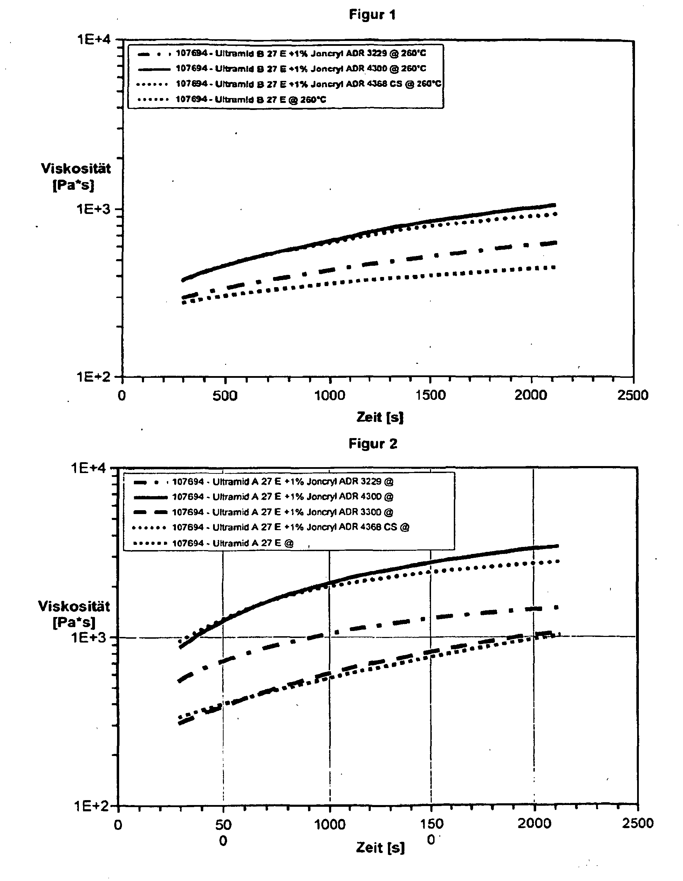

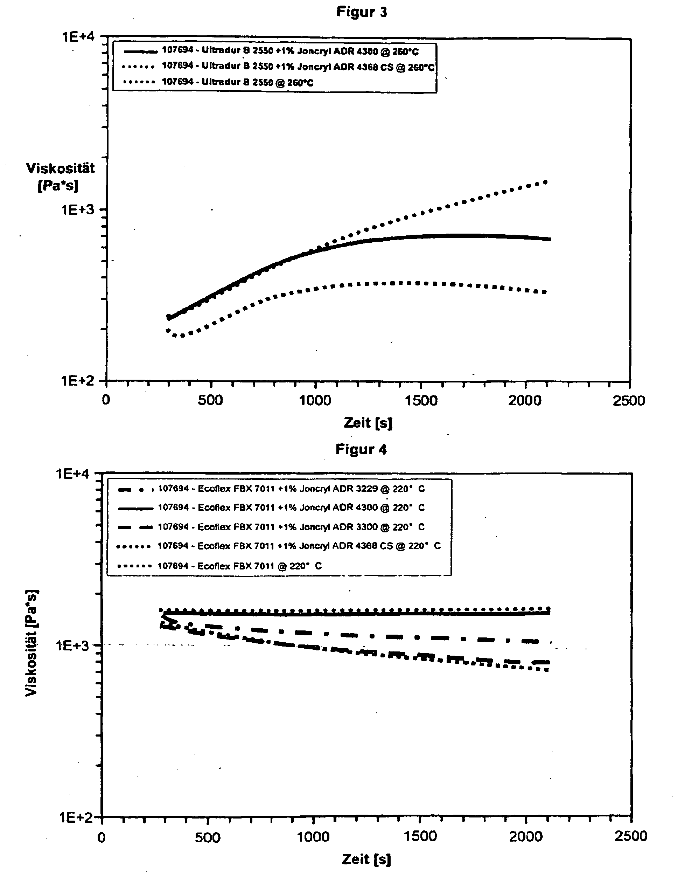

Messzeit: 30 min
Vorheizzeit : 5 min
Probenvorbereitung: Proben >7d bei 40°C unter Vakuum gelagert
Versuch 1: Ultramid B® bei 260 °C; siehe Figur 1.
Versuch 2: Ultramid A® bei 280 °C; siehe Figur 2.
Versuch 3: Ultradur® bei 260 °C; siehe Figur 3 (nicht gemäß Anspruch 1).
Versuch 4: Ecoflex® bei 220 °C; siehe Figur 4 (nicht gemäß Anspruch 1).

Die Versuche 1 bis 3 zeigen beispielhaft die Viskositätszunahme der Polymerschmelze (entspricht Aufbau von Molekulargewicht) bei Zugabe geringer Mengen an Kettenverlängerern.

Auch die Messungen des Versuchs 4 zeigen am Beispiel von Ecoflex® F, einem Copolyester aus Adipinsäure, Terephthalsäure und Butandiol, die Zunahme der Schmelzviskosität (korreliert mit zunehmendem Molekulargewicht) bei Zugabe geeigneter Kettenverlängerer.

Die Vorteile des erfindungsgemäßen Verfahrens gegenüber den bisher bekannten Verfahren sind somit ersichtlich.

## Patentansprüche

1. Verfahren zur Herstellung von Halbzeugen auf Basis von Polyamiden, durch Pultrusion, **dadurch gekennzeichnet dass** während des Tränkens der Fasern reaktive Kettenvertängerer, dem Polymer zugegeben werden, wobei die reaktiven Kettenverlängerer ausgewählt sind aus der Gruppe bestehend aus epoxygruppenhaltigen Molekülen.

2. Verfahren nach einem der vorangehenden Ansprüche, wobei das Halbzeug einen Werkstoff, ausgewählt aus der Gruppe bestehend aus glas- und/ oder kohlenstofffaserverstärkten Polyamiden, umfasst.

3. Verfahren nach Anspruch 1, wobei die Polyamide ausgewählt sind aus der Gruppe bestehend aus PA 6 und PA 6.6.

4. Verfahren nach einem der vorangehenden Ansprüche, wobei die reaktiven Kettenverlängerer Copolymere aus Styrol und Glycidylacrylaten sind.

5. Verfahren nach einem der vorangehenden Ansprüche, wobei die reaktiven Kettenverlängerer in einer Menge von 0,1 Gew.-% bis 10 Gew.-%, bezogen auf das Polymere, zugegeben werden.

## Claims

1. A process for producing semifinished products based on polyamides, via pultrusion, which comprises adding reactive chain extenders to the polymer during the saturation of the fibers, where the reactive chain extenders have been selected from the group consisting of molecules containing epoxy groups.

2. The process according to claim 1, where the semifinished product comprises a material selected from the group consisting of glass- and/or carbon-fiber-reinforced polyamides.

3. The process according to claim 1, where the polyamides have been selected from the group consisting of PA 6 and PA 6.6.

4. The process according to any of the preceding claims, where the reactive chain extenders are copolymers of styrene and of glycidyl acrylates.

5. The process according to any of the preceding claims, where the amount of the reactive chain extenders added is from 0.1 % by weight to 10% by weight, based on the polymer.

## Revendications

1. Procédé de fabrication de semi-finis à base de polyamides, par pultrusion, **caractérisé en ce que** des allongeurs de chaîne réactifs sont ajoutés au polymère pendant l'imprégnation des fibres, les allongeurs de chaîne réactifs étant choisis dans le groupe constitué par les molécules contenant des groupes époxy.

2. Procédé selon la revendication 1, dans lequel le semi-fini comprend un matériau choisi dans le groupe constitué par les polyamides renforcés par des fibres de verre et/ou de carbone.

3. Procédé selon la revendication 1, dans lequel les polyamides sont choisis dans le groupe constitué par le PA 6 et le PA 6.6.

4. Procédé selon l'une quelconque des revendications précédentes, dans lequel les allongeurs de chaîne réactifs sont des copolymères de styrène et d'acrylates de glycidyle.

5. Procédé selon l'une quelconque des revendications précédentes, dans lequel les allongeurs de chaîne réactifs sont ajoutés en une quantité de 0,1 % en poids à 10 % en poids, par rapport aux polymères.
